# FASCICULE DE BREVET EUROPEEN

(11) **EP 3 105 894 B1**
(45) Date de publication et mention de la délivrance du brevet: **09.10.2019**
(21) Numéro de dépôt: 15706896.6
(22) Date de dépôt: 09.02.2015
(51) Int. Cl.: H04L 12/715, H04L 12/703, H04W 76/11, H04W 76/12, H04W 24/04

(54) **PROCÉDÉ DE CONTRÔLE PAR ANTICIPATION DES FLUX DE DONNÉES PAR UN RÉSEAU SDN EN CAS DE DÉFAILLANCE D'UN ROUTEUR, DISPOSIF, PROGRAMME D'ORDINATEUR ET SUPPORT D'ENREGISTREMENT**
STEUERUNGSVERFAHREN BERUHEND AUF VORWEGNAHME FÜR DATENFLÜSSE DURCH EIN SDN NETZWERK IM FALLE EINES ROUTERSAUSFALLS, VORRICHTUNG, PROGRAMM UND MEDIUM
METHOD FOR CONTROL BY ANTICIPATION OF DATA FLOWS BY AN SDN NETWORK IN CASE OF FAILURE OF A ROUTER, DEVICE, PROGRAM AND MEDIUM

(30) Priorité: 12.02.2014 FR 1451069
(43) Date de publication de la demande: 21.12.2016
(73) Titulaire: Orange, 75015 Paris (FR)
(72) Inventeur: SHANMUGALINGAM, Sivasothy, 35000 Rennes (FR); BERTIN, Philippe, 35690 Acigne (FR)
(86) Numéro de dépôt international: PCT/FR2015/050304
(87) Numéro de publication internationale: WO 2015/121572

(56) Documents cités:
- WO-A1-2008/076201
- WO-A2-02/05068
- US-A1- 2006 153 067
- US-A1- 2010 220 736
- US-A1- 2013 343 176
- JIN X ET AL: "SoftCell: Taking Control of Cellular Core Networks", INTERNET CITATION, 15 mai 2013 (2013-05-15), pages 1-14, XP002719715, Extrait de l'Internet: URL:http://arxiv.org/pdf/1305.3568v1.pdf [extrait le 2014-02-04]
- LI JUNIPER NETWORKS B COLE JUNIPER NETWORKS P MORTON CISCO SYSTEMS D LI CISCO SYSTEMS T: "Cisco Hot Standby Router Protocol (HSRP); rfc2281.txt", CISCO HOT STANDBY ROUTER PROTOCOL (HSRP)?; RFC2281.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 1998 (1998-03-01), XP015008065,
- NADAS S ET AL: "Virtual Router Redundancy Protocol (VRRP) Version 3 for IPv4 and IPv6; rfc5798.txt", VIRTUAL ROUTER REDUNDANCY PROTOCOL (VRRP) VERSION 3 FOR IPV4 AND IPV6; RFC5798.TXT, INTERNET ENGINEERING TASK FORCE, IETF; STANDARD, INTERNET SOCIETY (ISOC) 4, RUE DES FALAISES CH- 1205 GENEVA, SWITZERLAND, 10 March 2010 (2010-03-10), pages 1-40, XP015068221, [retrieved on 2010-03-10]

## Description

### 1. Domaine de l'invention

L'invention se rapporte au domaine général des télécommunications et concerne plus particulièrement une architecture de réseau coeur IP (Internet Protocol). L'invention s'applique ainsi de façon privilégiée mais non limitative aux réseaux de communication conformes à la norme LTE (Long Term Evolution) définie par le consortium de standardisation 3GPP (Third Generation Partnership Project), et plus spécifiquement à l'architecture d'un réseau coeur LTE/EPC (Evolved Packet Core).

### 2. Etat de la technique antérieure

Une augmentation exponentielle du trafic des télécommunications mobiles est attendue dans les prochaines années, dynamisée par l'apparition de nouvelles applications, de nouveaux terminaux et de débits de communication de plus en plus élevés.

Dans ce contexte, l'architecture LTE/EPC a été définie par le consortium 3GPP pour fournir une connectivité IP transparente entre un terminal d'un utilisateur, autrement désigné par équipement utilisateur (ou UE pour « User Equipment »), et des réseaux de paquets de données (ou PDNs pour « Packet Data Networks ») aptes à offrir à ce terminal divers services de communication, tels que des services de voix sur IP ou VoIP (Voice over IP), de téléchargements de données, de vidéos à la demande, etc. Cette architecture repose sur :
- un réseau d'accès (ou E-UTRAN pour « Evolved-Universal Terrestrial Radio Access Network ») auquel est connecté le terminal de l'utilisateur via une station de base désignée par « eNodeB » (eNB) ; et
- un réseau coeur IP (ou EPC) gérant les échanges de données, en liaisons montante et descendante, entre ce terminal et les réseaux de paquets de données auxquels il est relié.

L'architecture LTE/EPC telle qu'elle est actuellement définie par le consortium 3GPP n'est pas réellement optimisée et rend difficile l'intégration de nouveaux services par les opérateurs des réseaux coeurs IP.

Plus précisément, cette architecture s'appuie aujourd'hui sur le protocole GTP (GPRS Tunneling Protocol) pour gérer la mobilité des terminaux au sein du réseau.

Il convient de noter que des tunnels de communication GTP distincts sont établis pour les différents types de trafic échangés dans le réseau (i.e. pour chaque qualité de service), et plus spécifiquement, pour chaque session de communication PDP (Packet Data Protocol) gérée par le réseau coeur. Le protocole de communication GTP contribue donc non seulement à la gestion de la mobilité des terminaux mais également à la gestion de la qualité de service dans le réseau.

Le protocole GTP est utilisé au-dessus du protocole de transport implémenté dans le réseau, c'est-à-dire typiquement au-dessus du protocole UDP (User Data Protocol) ou éventuellement du protocole TCP (Transmission Control Protocol), qui s'exécute lui-même au-dessus du protocole IP (Internet Protocol). L'utilisation du protocole GTP résulte donc en l'ajout de plusieurs entêtes (i.e. entêtes GTP, UDP/TCP et IP) à chaque paquet de données transitant par le réseau coeur, ce qui accroit significativement la proportion de données d'entête par rapport aux données dites "utilies" échangées entre les différents équipements du réseau pour gérer la mobilité des terminaux et la qualité de service des communications.

Le document de J. Kempf et al. intitulé "Moving the Mobile Evolved Packet Core to the Cloud", 5th International Workshop on Selected Topics in Mobile and Wireless Computing, 2012, propose une évolution de l'architecture de réseau coeur LTE/EPC définie par le consortium 3GPP dans laquelle les plans de données et de contrôle sont séparés, et qui utilise le principe de réseau défini par logiciel communément désigné par SDN pour "Software-Defined Networking". De façon connue, une architecture de réseau SDN permet de découpler les plans de contrôle et de données en centralisant l'intelligence du réseau (c'est-à-dire les fonctions de contrôle du réseau) au niveau d'un dispositif de contrôle logiciel. Le comportement des équipements du réseau est alors défini par des règles reçues du dispositif de contrôle, telles que des règles de traitement ou de transfert des données (i.e. du trafic). Le concept SDN peut s'appuyer sur le protocole de communication OpenFlow™ défini par l'ONF (Open Networking Foundation), qui permet une programmation simplifiée, via une interface standard, des équipements du réseau.

Afin de réduire la signalisation induite par l'établissement de tunnels de communication GTP entre les entités du réseau, les inventeurs ont proposé d'appliquer au réseau coeur IP le concept SDN et le protocole OpenFlow en remplaçant les équipements du réseau coeur IP tels que les passerelles de service (SGW, service gateway) ou les passerelles de réseau PDN (PGW, packet data network gateway) par des commutateurs OpenFlow et des routeurs OpenFlow, et en ajoutant une entité de contrôle OpenFlow responsable de l'établissement du plan de données. Chaque routeur est connecté à un ou plusieurs commutateurs, les routeurs sont connectés au réseau PDN, et les commutateurs sont connectés aux stations de base eNB. Ces routeurs et ces commutateurs sont programmables par le biais de règles de traitement définies par l'entité de contrôle OpenFlow et mises à jour en fonction de la topologie courante du réseau. Pour actualiser les informations de topologie du réseau utilisées par l'entité de contrôle OpenFlow définissant les règles de traitement, une interface de communication est définie entre l'entité de contrôle OpenFlow et une entité appelée MME (Mobility Management Entity), pré-existante, chargée de la gestion de la mobilité. Cette interface prévoit notamment la transmission par l'entité de gestion de la mobilité MME à l'entité de contrôle OpenFlow d'informations relatives à l'état des terminaux servis par les stations de base eNB qui sont connectées à l'entité de gestion de la mobilité MME.

Lorsqu'une défaillance affecte un routeur OpenFlow connecté au réseau PDN, le réseau PDN détermine dans le réseau coeur IP un routeur d'entrée de secours pour recevoir les flux de données destinés à des terminaux attachés aux stations de base connectées au réseau coeur IP, aussi appelés flux descendants. Ces flux ne correspondent pas aux entrées des tables de routage du routeur de secours, c'est à dire à ses règles de traitement. Ceci occasionne un grand nombre de requêtes du routeur de secours qui ne sait qu'en faire, vers l'entité de contrôle OpenFlow. Du fait de la surcharge de l'entité de contrôle et des délais de traitement, l'entité de contrôle et/ou le deuxième routeur peuvent tomber, et les sessions de communication portées par ces flux peuvent être interrompues.

Un des buts de l'invention est de remédier à ces inconvénients de l'état de la technique.

### 3. Exposé de l'invention

L'invention vient améliorer la situation à l'aide d'un procédé de contrôle d'un réseau comme défini dans la revendication 1 ainsi comme défini dans les autres revendications indépendantes.

Selon la technique antérieure, les règles de traitement de flux ne sont pas établies dans un deuxième routeur au moment où il reçoit les flux initialement destinés à être acheminés au travers d'un premier routeur. Ne sachant pas quoi faire de ces flux, le deuxième routeur doit inspecter chacun des flux et interroger un contrôleur. Par exemple selon la norme OpenFlow, le deuxième routeur utilise le premier paquet détecté d'un flux inconnu, l'encapsule dans un paquet OpenFlow appelé "Packetln" et l'envoie au contrôleur ; le contrôleur décapsule le paquet, identifie le flux, élabore la règle de traitement (c'est à dire une règle de routage), réencapsule le paquet dans un paquet OpenFlow appelé "PacketOut" comprenant également ladite règle, et renvoie le paquet au deuxième routeur. Ensuite le deuxième routeur applique cette règle pour tous les paquets du même flux, sans solliciter le contrôleur. S'il y a un grand nombre de flux, le deuxième routeur doit solliciter un grand nombre de fois le contrôleur avec un échange "Packetln PacketOut", ce qui pose un problème de consommation de ressources pour le contrôleur et le deuxième routeur.

Le problème causé par la réception de flux de données non prévus par un deuxième routeur en secours d'un premier routeur défaillant est résolu grâce au procédé de contrôle selon l'invention qui est nouveau et inventif.

En effet selon l'invention, lorsque le premier routeur n'est plus en mesure de recevoir les flux de données du réseau externe (PDN), le procédé de contrôle selon l'invention anticipe la réaction de ce réseau PDN. Bien qu'étant géré indépendamment du réseau coeur IP, le réseau PDN obtient une information selon laquelle le deuxième routeur peut être utilisé en remplacement du premier en cas de problème. L'entité de contrôle du réseau coeur IP, par exemple un contrôleur OpenFlow, peut donc mettre à jour la topologie et les règles de traitement des flux sans attendre que le deuxième routeur reçoive lesdits flux du réseau PDN. Les règles de traitement du deuxième routeur sont donc mises à jour afin que le deuxième routeur, auquel le réseau PDN transmet les flux plutôt qu'au premier routeur, puisse immédiatement traiter les flux adéquatement.

L'étape d'affectation du routeur de secours permet de prévoir à l'avance quel routeur prendra la place du premier routeur en cas de défaillance du premier.

L'étape de transmission vers le réseau PDN, d'une information relative à cette affectation, permet d'indiquer au réseau PDN, avant qu'une défaillance du premier routeur survienne, que le réseau coeur IP préférerait que les flux par le réseau PDN soient reroutés sur le routeur de secours, c'est à dire le deuxième routeur, plutôt qu'un autre routeur du réseau coeur IP.

L'étape de détection d'une défaillance permet de déterminer à partir de quel moment le routeur de secours est susceptible de recevoir les flux jusque là reçus par le premier routeur, et accessoirement permet au contrôleur de mettre à jour la topologie du réseau coeur IP. L'hypothèse est qu'en parallèle le réseau PDN détecte la même défaillance, ce qui aura pour effet de rediriger vers le deuxième routeur les flux initialement dirigés vers le premier routeur, car à ce stade le réseau PDN est déjà informé de la préférence du réseau coeur IP.

Enfin, l'étape de transmission des règles de traitement au routeur de secours permet d'activer, avant l'arrivée de ces flux dans ce routeur ou au même moment, les règles de traitement de ces flux afin que ceux-ci soient acheminés jusqu'aux terminaux auxquels ils sont destinés, de manière transparente pour les terminaux et sans interruption des sessions de communication portant les flux de données.

On comprend que grâce à l'invention, le contrôleur transmet au deuxième routeur, c'est à dire au routeur de secours, les règles de traitement déjà déterminées, s'évitant ainsi d'être excessivement sollicité par le deuxième routeur lorsqu'une défaillance du premier routeur survient, et évitant au routeur de secours de trop solliciter le contrôleur et ainsi de risquer d'interrompre la continuité des flux de données arrivant soudainement en grand nombre.

Selon un aspect de l'invention, le procédé de contrôle comprend également une étape de mémorisation de la dite au moins une règle déterminée, la règle demeurant mémorisée tant que l'au moins un flux correspondant est en cours d'acheminement ; aussi selon cet aspect, l'étape de transmission de l'au moins une règle au routeur de secours comprend les règles mémorisées.

Grâce à cet aspect, le contrôleur transmet au deuxième routeur, c'est à dire au routeur de secours, les règles de traitement non seulement déjà déterminées mais seulement celles qui sont en cours, évitant ainsi au routeur de secours de recevoir des règles inutiles.

Selon l'invention, l'étape de transmission de l'au moins une règle au routeur de secours est déclenchée par l'étape de détection d'un événement relatif à une défaillance du premier routeur.

Ainsi, le contrôleur transmet immédiatement au deuxième routeur, c'est à dire au routeur de secours, les règles de traitement de manière pro-active, limitant ainsi la perte de données des flux basculant du premier vers le deuxième routeur.

Selon un aspect de l'invention, l'au moins une étape d'établissement d'une règle de traitement d'un flux par le premier routeur comprend :
- une étape de réception d'une requête du premier routeur, comprenant un identifiant d'un flux ;
- une étape de détermination d'une règle de traitement pour le flux ;
- une étape de transmission d'une réponse au premier routeur, comprenant ladite règle,
et l'étape de transmission d'au moins une règle au routeur de secours comprend la transmission d'une pluralité desdites réponses.

Grâce à cet aspect, la transmission des règles de traitement au routeur de secours est facilitée et accélérée. Les règles de traitement de flux pour le premier routeur sont déterminées une à une au fur et à mesure qu'il reçoit de nouveaux flux, à l'aide d'une pluralité de requêtes/réponses entre le premier routeur et le contrôleur. Une réponse comprend donc la règle de traitement pour un flux. Si ce flux est reçu par un autre routeur à la place du premier routeur, la même règle lui est tranposable, car dans le réseau coeur IP un même flux de données en provenance du réseau PDN peut être routé vers le même commutateur quel que soit le routeur. Selon l'invention, au lieu de déterminer pour le routeur de secours, comme dans la technique antérieure, toutes les règles de traitement une à une au fur et à mesure de l'arrivée des flux sur le routeur de secours, le contrôleur lui transmet la pluralité de réponses déjà transmises au premier routeur.

Par exemple selon la norme OpenFlow, le contrôleur n'a donc pas besoin de redéterminer les règles de traitement à établir à l'aide de paquets Packetln et PaquetOut individualisés par flux, il suffit qu'il transmette au routeur de secours, en une seule fois, tous les PacketOut déterminés pour le premier routeur, ce qui optimise les échanges entre routeur de secours et contrôleur.

Selon un aspect de l'invention, l'étape de transmission d'une information relative à l'affectation du routeur de secours comprend la transmission d'une première requête conforme au protocole BGP vers le premier routeur, comprenant un premier paramètre de préférence, et la transmission d'une deuxième requête conforme au protocole BGP vers le deuxième routeur, comprenant un deuxième paramètre de préférence de valeur inférieure au premier.

L'utilisation de requêtes BGP permet de configurer les liens entre le réseau PDN et les routeurs du réseau coeur IP. Ainsi, grâce à cet aspect, c'est à dire grâce aux requêtes BGP indiquant des préférences différentes pour chacun des liens entre le réseau PDN et le premier routeur d'une part, et entre le réseau PDN et le deuxième routeur d'autre part, l'émission des flux de données du réseau PDN est effectuée par défaut vers le premier routeur, et vers le deuxième routeur lorsque le réseau PDN détecte un problème sur le premier routeur. En effet, une requête BGP est transverse entre domaines et elle sera propagée du domaine constitué par le réseau coeur IP vers le domaine constitué par le réseau PDN. Ainsi, un routeur BGP situé dans le réseau PDN connecté aux deux routeurs du réseau coeur IP recevra les deux requêtes BGP et saura lequel des deux routeurs du réseau coeur IP est prévu par le réseau coeur IP pour être en secours sur l'autre, c'est à dire celui qui a un paramètre de préférence plus élevé. Le routeur BGP du réseau PDN émet par défaut les flux vers le routeur protégé, et si celui est victime d'une défaillance détectée par le routeur BGP du réseau PDN, c'est vers le routeur de secours que les flux seront émis.

Selon un aspect de l'invention, l'événement relatif à une défaillance du premier routeur est l'obtention d'une information de défaillance en provenance du premier routeur.

Grâce à cet aspect, l'information arrive au plus vite au contrôleur, sans passer par un équipement intermédiaire.

Selon un aspect de l'invention, l'information de défaillance est obtenue dans une réponse conforme au protocole BFD.

Grâce à cet aspect, l'information de défaillance est obtenue plus rapidement que, par exemple, à l'aide de la réponse Keepalive du protocole BGP. Le protocole BFD (Bidirectional Forwarding Detection, RFC 5880) permet de détecter une défaillance entre deux équipements connectés par un lien, même quand le support physique de ce lien ne prévoit aucun mécanisme de détection de défaillance.

Selon un aspect de l'invention, l'événement relatif à une défaillance du premier routeur est l'obtention d'une pluralité de requêtes de règles de traitement de flux en provenance du deuxième routeur.

Grâce à cet aspect, lorsque le contrpleur reçoit en provenance du deuxième routeur un nombre anormal de requêtes Packetln concernant des flux normalement traités par le premier routeur, le contrôleur dédecte indirectement qu'une défaillance est survenue dans le premier routeur. Cet événement est indicateur que les flux sont dirigés par le réseau de paquets externe vers le deuxième routeur au lieu du premier routeur, en raison d'une défaillance du premier routeur, détectée par le réseau de paquets externe avant le contôleur.

Selon un aspect de l'invention, l'établissement des règles de traitement des flux de données est conforme au protocole OpenFlow.

Grâce à cet aspect, la signalisation induite par l'établissement de tunnels de communication entre un terminal et le point de sortie du réseau coeur IP vers le réseau PDN est grandement réduite.

Les différents aspects du procédé de contrôle qui viennent d'être décrits peuvent être mis en oeuvre indépendamment les uns des autres ou en combinaison les un avec les autres.

L'invention concerne encore un dispositif comme défini dans la revendication 9.

L'invention concerne aussi un contrôleur comme défini dans la revendication 10 apte à émettre des requêtes intra-domaines conformes au protocole OpenFlow, et des requêtes inter-domaines.

Les requêtes intra-domaines sont des requêtes destinées à des équipements du même domaine que le contrôleur, c'est à dire des équipements du réseau coeur IP. Les requêtes inter-domaines sont des requêtes capables d'atteindre des équipements d'un autre domaine, par exemple des équipements d'un réseau de paquets externe faisant ou non partie d'un système autonome différent du réseau coeur IP. Les requêtes BGP par exemple, sont des requêtes inter-domaine.

L'invention concerne aussi un programme d'ordinateur comme défini dans la revendication 11 comprenant des instructions pour la mise en oeuvre des étapes du procédé de contrôle qui vient d'être décrit, lorsque ce programme est exécuté par un processeur.

L'invention concerne enfin un support d'enregistrement comme défini dans la revendication 12 lisible par un contrôleur sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique des terminaux et des stations de bases, un réseau coeur IP, un réseau PDN, et des flux de données du réseau PDN vers les terminaux, selon un aspect de l'invention,
- la figure 2 présente un exemple de mise en oeuvre du procédé de contrôle, selon un mode de réalisation de l'invention,
- la figure 3 présente un exemple de structure d'un dispositif de contrôle, selon un aspect de l'invention.

### 5. Description détaillée d'au moins un mode de réalisation de l'invention

Dans la suite de la description, on présente des exemples de plusieurs modes de réalisation de l'invention se basant sur les normes IETF et OpenFlow, mais l'invention s'applique également à tout type de réseau programmable ayant pour base le concept SDN.

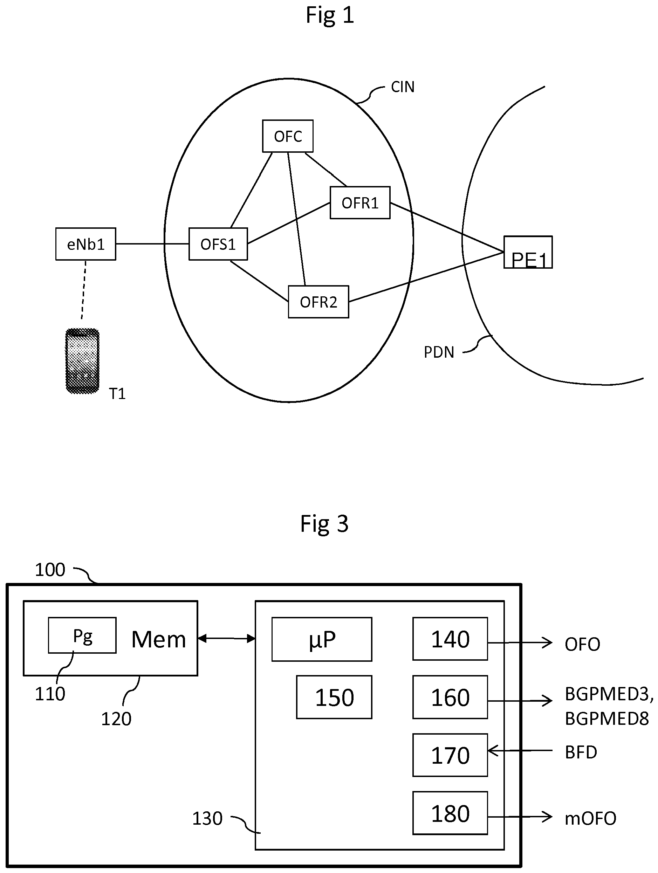

La **figure 1** présente de façon schématique des terminaux et des stations de bases, un réseau coeur IP, un réseau PDN, et des flux de données du réseau PDN vers les terminaux, selon un aspect de l'invention.

Le réseau coeur IP, CIN, se situe entre les stations de base desservant les terminaux mobiles et un réseau de paquet de données externe, PDN, tel que par exemple le réseau Internet . Le réseau CIN comprend des routeurs tels que OFR1 et OFR2 et des commutateurs tels que OFS1 connectés entre eux. Un seul commutateur est illustré par simplicité, mais plusieurs commutateurs interconnectés peuvent se trouver entre un routeur et une station de base. Les commutateurs sont donc connectés à des stations de base telles que eNb1, auxquelles sont attachés des terminaux tels que T1, et les routeurs sont connectés à des routeurs du réseau PDN tels que PE1. Un routeur du réseau PDN est conforme au protocle BGP et est connecté à au moins deux routeurs du réseau CIN, afin de pouvoir router de l'un vers l'autre les flux de données destinés aux terminaux, en cas de défaillance de l'un.

Selon l'invention, le réseau CIN comprend également au moins un contrôleur OFC, connecté à chacun des commutateurs et routeurs qu'il contrôle, selon le protocole OpenFlow. Ainsi, les flux peuvent être routés dans le réseau CIN à l'aide de tables de routage établies et mises à jour par le contrôleur, et il n'est plus nécessaire comme dans la norme LTE/EPC d'établir des tunnels IP pour que les flux entre le réseau PDN et les terminaux traversent le réseau coeur IP. Les liaisons radioélectriques, et la mobilité des terminaux entre stations de base, peuvent toutefois être gérées, comme dans le réseau coeur IP conforme à la norme LTE/EPC, par un équipement du type MME (Mobility Management Entity, non illustré), connecté aux stations de base et au contrôleur OFC.

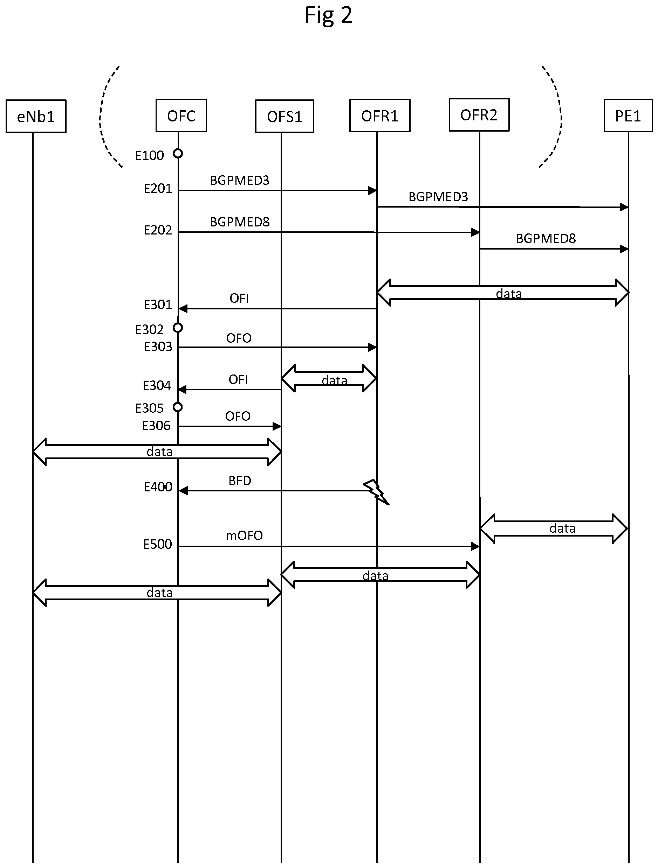

La **figure 2** présente un exemple de mise en oeuvre du procédé de contrôle, selon un mode de réalisation de l'invention.

Dans cet exemple un seul flux est illustré et par simplicité le procédé est décrit pour ce flux, mais le procédé s'applique naturellement au traitement de plusieurs flux à la fois.

Lors d'une étape E100, le contrôleur OFC affecte le routeur OFR2 au routeur OFR1 en tant que routeur de secours. Ceci peut être fait en fonction d'instructions reçues d'un autre équipement du réseau CIN, ou en fonction d'informations déjà détenues par le contrôleur OFC.

Lors d'étapes E201 et E202, le contrôleur OFC transmet vers le réseau PDN une information relative à l'affectation effectuée lors de l'étape E100, afin d'influer les choix de routages des flux de données qui seront effectués par le réseau ODN en cas de défaillance du routeur OFR1.

Plus précisément, lors de l'étape E201, le contrôleur OFC transmet un message BGP au routeur OFR1 comprenant une valeur déterminée de priorité à affecter à une route passant par OFR1, par exemple MED=3 (Multi-Exit Discriminator, RFC4451, est un paramètre utilisé pour discriminer entre eux des points dentrée/sortie entre deux réseaux autonomes voisins, la valeur la plus basse indiquant une priorité plus élevée). Ce message est encapsulé dans un paquet OpenFlow de type PacketOut. Ce message est décapsulé puis transmis par OFR1 à PE1 avec la même valeur MED=3, même si PE1 et OFR1 ne font pas partie du même réseau.

Similairement, lors de l'étape E202, le contrôleur OFC transmet un autre message BGP au routeur OFR2 comprenant une valeur déterminée de priorité à affecter à une route passant par OFR2 supérieure à celle déterminée dans le cas du routeur OFR1, par exemple MED=8. Ce message est encapsulé dans un paquet OpenFlow de type PacketOut. Ce message est décapsulé puis transmis par OFR2 à PE1 avec la même valeur MED=8. Ainsi, le routeur PE1 considérera que la route vers le routeur OFR1 est prioritaire sur celle vers le routeur OFR2, ce qui veut dire qu'il utilisera la route vers le routeur OFR2 que s'il ne peut pas utiliser celle vers le routeur OFR1, par exemple si le routeur PE1 détecte une défaillance du routeur OFR1.

Tant qu'aucune défaillance n'affecte le routeur OFR1, le routeur PE1 peut émettre un flux de données ("data" dans la figure 2) vers le routeur OFR1. Selon la norme OpenFlow, si le flux de données n'est pas connu du routeur OFR1, il consulte le contrôleur OFC, comme décrit dans les étape E301, E302 et E303.

Lors d'une étape E301, le contrôleur reçoit un paquet OpenFlow de type Packetln de la part du routeur OFR1, encapsulant le premier paquet du flux inconnu détecté par le routeur OFR1.

Lors d'une étape E302, le contrôleur OFC décapsule, identifie le flux, élabore la règle de traitement, c'est à dire une règle de routage du flux, et réencapsule le paquet dans un paquet OpenFlow de type PacketOut comprenant également ladite règle.

Lors d'une étape E303 le contrôleur renvoie le paquet au routeur OFR1. Ensuite le routeur OFR1 applique cette règle pour tous les paquets du même flux, sans solliciter le contrôleur.

Le flux est ensuite transmis vers le commutateur OFS1 en conformité avec la règle de traitement reçue par le routeur OFR1. Si le flux est inconnu du commutateur OFS1, il consulte le contrôleur OFS lors d'étapes E304, E305 et E306 qui ne sont pas décrites car similaires aux étapes précédemment décrites E301, E302 et E303.

Le flux est ensuite transmis vers la station de base eNb1, éventuellement au travers d'un ou plusieurs autres commutateurs, à laquelle est attachée le terminal T1 destinataire du flux (non illustré dans la figure 2).

Lors d'une étape E400, une défaillance affectant le routeur OFR1 est détectée par le contrôleur OFC, par exemple par le biais d'un message conforme au protocole BFD (Bidirectional Forwarding Detection, RFC 5880).

Sans attendre, le contrôleur OFC établit alors les règles de traitement nécessaires dans les équipement du réseau CIN susceptibles de recevoir les flux de données émis par le réseau PDN vers un autre routeur que le routeur OFR1 défaillant.

Ainsi, lors d'une étape E500, le contrôleur OFC émet vers le routeur OFR2, qui est le routeur de secours pour le routeur OFR1, l'ensemble des paquets PaquetOut qu'il a envoyés précédemment au routeur OFR1. Dans les faits, il établit la règle de traitement du flux pour le routeur OFR2 en copiant celle établie pour le routeur OFR1, ce qui évite à OFR2 d'avoir à consulter le contrôleur OFC pour savoir que faire du flux.

Le flux est ensuite transmis du routeur OFR2 vers le commutateur OFS1 en conformité avec la règle de traitement reçue par le routeur OFR2 lors de l'étape E500.

Le flux est ensuite transmis du commutateur OFS1 vers la station de base eNb1, à laquelle est attachée le terminal T1 destinataire du flux (non illustré dans la figure 2).

L'exemple ne décrit qu'un flux mais se généralise évidemment à des situations où un très grand nombre de flux entre le réseau PDN et le réseau CIN transite par les routeurs OFR1 et OFR2, typiquement plusieurs milliers, voire millions de flux, destinés à des milliers de terminaux différents. On comprend alors l'avantage d'éviter un très grand nombre d'étapes de consultations utilisant chacune un échange OpenFlow Packetln/PacketOut telles que décrites aux étapes E301, E302, E303. Avantageusement, lorsque les flux émis par le routeur PE1 basculent du routeur OFR1 au routeur OFR2, elles sont toutes remplacées par une seule étape E500, selon l'invention.

La figure 2 n'illustre qu'un seul commutateur OFS1 mais l'exemple décrit ci-dessus se généralise facilement à plusieurs commutateurs dans le réseau CIN. Si les flux en mode secours ne passent plus par le commutateur OFS1 mais par un autre commutateur OFS2, il est également possible et avantageux d'éviter un très grand nombre d'étapes de consultations Packetln/PacketOut par OFS2, telles que celles décrites pour OFS1 aux étapes E304, E305, E306, en les remplaçant par une seule étape similaire à l'étape E500, où le contrôleur OFC émet en une seule fois vers le commutateur OFS2 l'ensemble des paquets PaquetOut qu'il a envoyés précédemment au commutateur OFS1.

En relation avec la **figure 3**, on présente maintenant un exemple de dispositif de contrôle, selon un aspect de l'invention.

Le dispositif 100 de contrôle met en oeuvre le procédé de contrôle, dans tous ses modes de réalisation dont ceux qui viennent d'être décrits.

Un tel dispositif 100 peut être mis en oeuvre dans un équipement spécialisé dans le contrôle de routeurs et de commutateurs conformes au protocole OpenFlow, tel qu'un serveur. Ce dispostif peut également être hébergé dans équipement MME.

Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé de contrôle selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :
- un module d'établissement 140, apte à établir une règle (OFO) de traitement à un flux de données, destinée à être appliquée par un premier routeur à ce flux,
- un module d'affectation 150, apte à affecter à un deuxième routeur en tant que routeur de secours au premier routeur,
- un module de transmission 160, apte à transmettre vers un réseau de paquets de données externe une information (BGPMED3, BGPMED8) relative à l'affectation du deuxième routeur en tant que routeur de secours au premier routeur,
- un module de détection 170, apte à détecter un événement (BFD) relatif à une défaillance du premier routeur,
- un module de transmission 180, apte à transmettre au deuxième routeur l'ensemble (mOFO) des règles de traitement des flux de données établies pour le premier routeur et destinées à être appliquées par le deuxième routeur à ces flux.

Les modules décrits en relation avec la figure 3 peuvent être des modules matériels ou logiciels.

Les exemples de réalisation de l'invention qui viennent d'être présentés ne sont que quelques uns des modes de réalisation envisageables. Ils montrent que l'invention permet de contrôler par anticipation des flux de données dans un réseau OpenFlow, quand ces flux arrivent sur un routeur de secours pour lequel les règles de traitement de ces flux n'ont pas été établies initialement, en cas de défaillance du routeur qui traitait les flux initialement.

## Revendications

1. **Procédé** de contrôle d'un réseau SDN dit réseau coeur IP (CIN), ledit réseau coeur IP comprenant au moins un premier (OFR1) et un deuxième (OFR2) routeurs connectés à un réseau de paquets de données externe (PDN) et une pluralité de commutateurs (OFS1) aptes à connecter au moins une station de base (eNb1) d'un réseau d'accès aux premier et deuxième routeurs,
ledit réseau de paquets de données étant apte à émettre des flux de données au travers du réseau coeur IP à destination de terminaux (T1) attachés à l'au moins une station de base,
des flux de données étant en cours d'acheminement entre le réseau externe et au moins un terminal,
le procédé comprenant une étape (E301, E302, E303) d'établissement d'une règle de traitement d'un flux, par flux reçu par le premier routeur,
**caractérisé en ce que** le procédé de contrôle comprend en outre :
• une étape (E100) d'affectation du deuxième routeur en tant que routeur de secours pour le premier routeur ;
• une étape (E201, E202) de transmission vers le réseau de paquets de données externe d'une information relative à ladite affectation du routeur de secours;
• une étape (E400) de détection d'un événement relatif à une défaillance du premier routeur ;
• une étape (E500) de transmission au routeur de secours de l'ensemble des règles de traitement établies pour le premier routeur, destinées à être appliquées par le routeur de secours, l'étape de transmission (E500) étant déclenchée par l'étape (E400) de détection d'un événement relatif à une défaillance du premier routeur.

2. **Procédé** de contrôle selon la revendication 1, comprenant une étape de mémorisation des règles établies, une règle demeurant mémorisée tant que l'au moins un flux correspondant est en cours d'acheminement, et où l'étape (E500) de transmission de l'ensemble des règles au routeur de secours comprend les règles mémorisées.

3. **Procédé** de contrôle selon la revendication 1, où l'étape d'établissement d'une règle de traitement d'un flux comprend :
• une étape (E301) de réception d'une requête du premier routeur, comprenant un identifiant du flux ;
• une étape (E302) de détermination d'une règle de traitement pour le flux ;
• une étape (E303) de transmission d'une réponse au premier routeur, comprenant ladite règle,
le procédé étant **caractérisé en ce que** l'étape (E500) de transmission d'au moins une règle au routeur de secours comprend la transmission d'une pluralité desdites réponses.

4. **Procédé** de contrôle selon la revendication 1, où l'étape de transmission (E201, E202) d'une information relative à l'affectation du routeur de secours comprend la transmission d'une première requête (E201) conforme au protocole BGP vers le premier routeur, comprenant un premier paramètre de préférence, et la transmission d'une deuxième requête (E202) conforme au protocole BGP vers le deuxième routeur, comprenant un deuxième paramètre de préférence de valeur inférieure au premier.

5. **Procédé** de contrôle selon l'une quelconque des revendications précédentes, où l'événement relatif à une défaillance du premier routeur est l'obtention (E400) d'une information de défaillance en provenance du premier routeur.

6. **Procédé** de contrôle selon la revendication précédente, où l'information de défaillance est obtenue dans une réponse conforme au protocole BFD.

7. **Procédé** de contrôle selon l'une quelconque des revendications précédentes, où l'événement relatif à une défaillance du premier routeur est l'obtention d'une pluralité de requêtes de règles de traitement de flux en provenance du deuxième routeur.

8. **Procédé** de contrôle selon l'une quelconque des revendications précédentes, où l'établissement des règles de traitement des flux de données est conforme au protocole OpenFlow.

9. **Dispositif** de contrôle d'un réseau SDN dit réseau coeur IP, ledit réseau coeur IP comprenant au moins un premier et un deuxième routeurs connectés à un réseau de paquets de données externe et une pluralité de commutateurs aptes à connecter au moins une station de base d'un réseau d'accès aux premier et deuxième routeurs, ledit réseau de paquets de données étant apte à émettre des flux de données au travers du réseau coeur IP à destination de terminaux attachés à l'au moins une station de base,
des flux de données étant en cours d'acheminement entre le réseau externe et au moins un terminal,
le dispositif comprenant un module (140) d'établissement d'une règle de traitement d'un flux, par flux reçu par le premier routeur,
**caractérisé en ce que** le dispositif de contrôle comprend en outre :
• un module (150) d'affectation du deuxième routeur en tant que routeur de secours pour le premier routeur ;
• un module (160) de transmission vers le réseau de paquets de données externe d'une information relative à ladite affectation du routeur de secours;
• un module (170) de détection d'un événement relatif à une défaillance du premier routeur ;
• un module (180) de transmission au routeur de secours de l'ensemble des règles de traitement établies pour le premier routeur, destinées à être appliquées par le routeur de secours, le module de transmission étant déclenché par le module de détection d'un événement relatif à une défaillance du premier routeur.

10. **Contrôleur** apte à émettre des requêtes conformes au protocole OpenFlow et destinées à des équipements d'un réseau SDN dit réseau coeur IP, et des requêtes capables d'atteindre des équipements d'un réseau de paquets externe, le contrôleur comprenant un dispositif de contrôle selon la revendication 9.

11. **Programme d'ordinateur, caractérisé en ce qu'**il comprend des instructions pour la mise en oeuvre des étapes du procédé de contrôle selon la revendication 1, lorsque ce programme est exécuté par un processeur.

12. **Support d'enregistrement** lisible par un contrôleur, sur lequel est enregistré le programme selon la revendication 11.

## Patentansprüche

1. Verfahren zur Steuerung eines SDN-Netzes, IP-Kernnetz (CIN) genannt, wobei das IP-Kernnetz wenigstens einen ersten (OFR1) und einen zweiten (OFR2) Router, die mit einem externen Datenpaketnetz (PDN) verbunden sind, und mehrere Switches (OFS1), die dafür ausgelegt sind, wenigstens eine Basisstation (eNb1) eines Zugangsnetzes mit dem ersten und zweiten Router zu verbinden, umfasst,
wobei das Datenpaketnetz dafür ausgelegt ist, Datenströme über das IP-Kernnetz an Endgeräte (T1) zu senden, die an die wenigstens eine Basisstation angebunden sind,
wobei Datenströme zwischen dem externen Netz und wenigstens einem Endgerät geroutet werden,
wobei das Verfahren einen Schritt (E301, E302, E303) der Erstellung einer Regel zur Verarbeitung eines Stroms umfasst, für jeden Strom, der durch den ersten Router empfangen wird,
**dadurch gekennzeichnet, dass** das Steuerungsverfahren außerdem umfasst:
• einen Schritt (E100) der Zuweisung des zweiten Routers als Ersatzrouter für den ersten Router;
• einen Schritt (E201, E202) der Übertragung, an das externe Datenpaketnetz, einer Information in Bezug auf die Zuweisung des Ersatzrouters;
• einen Schritt (E400) der Erkennung eines Ereignisses, das einen Ausfall des ersten Routers betrifft;
• einen Schritt (E500) der Übertragung, an den Ersatzrouter, der Gesamtheit der für den ersten Router erstellten Regeln zur Verarbeitung, die dazu bestimmt sind, durch den Ersatzrouter angewendet zu werden, wobei der Schritt der Übertragung (E500) durch den Schritt (E400) der Erkennung eines Ereignisses, das einen Ausfall des ersten Routers betrifft, ausgelöst wird.

2. Verfahren zur Steuerung nach Anspruch 1, welches einen Schritt der Speicherung der erstellten Regeln umfasst, wobei eine Regel gespeichert bleibt, solange der entsprechende wenigstens eine Strom geroutet wird, und wobei der Schritt (E500) der Übertragung der Gesamtheit der Regeln an den Ersatzrouter die gespeicherten Regeln umfasst.

3. Verfahren zur Steuerung nach Anspruch 1, wobei der Schritt der Erstellung einer Regel zur Verarbeitung eines Stroms umfasst:
• einen Schritt (E301) des Empfangs einer Anforderung von dem ersten Router, die eine Kennung des Stroms umfasst;
• einen Schritt (E302) der Bestimmung einer Regel zur Verarbeitung für den Strom;
• einen Schritt (E303) der Übertragung einer Antwort an den ersten Router, welche die Regel umfasst,
wobei das Verfahren **dadurch gekennzeichnet ist, dass** der Schritt (E500) der Übertragung wenigstens einer Regel an den Ersatzrouter die Übertragung mehrerer der Antworten umfasst.

4. Verfahren zur Steuerung nach Anspruch 1, wobei der Schritt der Übertragung (E201, E202) einer Information in Bezug auf die Zuweisung des Ersatzrouters die Übertragung einer ersten Anforderung (E201) gemäß dem Protokoll BGP an den ersten Router umfasst, welche einen ersten Präferenzparameter umfasst, und die Übertragung einer zweiten Anforderung (E202) gemäß dem Protokoll BGP an den zweiten Router, welche einen zweiten Präferenzparameter mit einem Wert, der kleiner als der erste ist, umfasst.

5. Verfahren zur Steuerung nach einem der vorhergehenden Ansprüche, wobei das Ereignis, das einen Ausfall des ersten Routers betrifft, das Erhalten (E400) einer Ausfallinformation von dem ersten Router ist.

6. Verfahren zur Steuerung nach dem vorhergehenden Anspruch, wobei die Ausfallinformation in einer Antwort gemäß dem Protokoll BFD erhalten wird.

7. Verfahren zur Steuerung nach einem der vorhergehenden Ansprüche, wobei das Ereignis, das einen Ausfall des ersten Routers betrifft, das Erhalten mehrerer Anforderungen von Regeln zur Verarbeitung eines Stroms von dem zweiten Router ist.

8. Verfahren zur Steuerung nach einem der vorhergehenden Ansprüche, wobei die Erstellung der Regeln zur Verarbeitung der Datenströme gemäß dem OpenFlow-Protokoll erfolgt.

9. Vorrichtung zur Steuerung eines SDN-Netzes, IP-Kernnetz genannt, wobei das IP-Kernnetz wenigstens einen ersten und einen zweiten Router, die mit einem externen Datenpaketnetz verbunden sind, und mehrere Switches, die dafür ausgelegt sind, wenigstens eine Basisstation eines Zugangsnetzes mit dem ersten und zweiten Router zu verbinden, umfasst,
wobei das Datenpaketnetz dafür ausgelegt ist, Datenströme über das IP-Kernnetz an Endgeräte zu senden, die an die wenigstens eine Basisstation angebunden sind,
wobei Datenströme zwischen dem externen Netz und wenigstens einem Endgerät geroutet werden,
wobei die Vorrichtung ein Modul (140) zur Erstellung einer Regel zur Verarbeitung eines Stroms umfasst, für jeden Strom, der durch den ersten Router empfangen wird,
**dadurch gekennzeichnet, dass** die Steuervorrichtung außerdem umfasst:
• ein Modul (150) zur Zuweisung des zweiten Routers als Ersatzrouter für den ersten Router;
• ein Modul (160) zur Übertragung, an das externe Datenpaketnetz, einer Information in Bezug auf die Zuweisung des Ersatzrouters;
• ein Modul (170) zur Erkennung eines Ereignisses, das einen Ausfall des ersten Routers betrifft;
• ein Modul (180) zur Übertragung, an den Ersatzrouter, der Gesamtheit der für den ersten Router erstellten Regeln zur Verarbeitung, die dazu bestimmt sind, durch den Ersatzrouter angewendet zu werden, wobei das Modul zur Übertragung durch das Modul zur Erkennung eines Ereignisses, das einen Ausfall des ersten Routers betrifft, ausgelöst wird.

10. Kontroller, der fähig ist, Anforderungen gemäss dem openFlow-Protokoll an Ausrüstungen eines SDN-Netzes, IP-Kernnetz (CIN) genannt, und Anforderungen, die Ausrüstungen eines externen Datenpaketnetz (PDN) erreichen können, zu senden, wobei der Kontroller eine Steuervorrichtung nach Anspruch 9 umfasst.

11. Computerprogramm, **dadurch gekennzeichnet, dass** es Anweisungen zur Durchführung der Schritte des Verfahrens zur Steuerung nach Anspruch 1, wenn dieses Programm von einem Prozessor ausgeführt wird, umfasst.

12. Aufzeichnungsmedium, das von einer Steuereinheit lesbar ist und auf dem das Programm gemäß Anspruch 11 aufgezeichnet ist.

## Claims

1. Method of control of an SDN network, known as an IP core network (CIN), said IP core network including at least one first (OFR1) and one second (OFR2) router connected to an external packet data network (PDN) and a plurality of switches (OFS1) capable of connecting at least one base station (eNb1) of a network for access to the first and second routers,
said packet data network being capable of transmitting data streams through the IP core network destined for terminals (T1) attached to the at least one base station,
data streams currently being routed between the external network and at least one terminal,
the method including a step (E301, E302, E303) for establishing one stream processing rule per stream received by the first router,
**characterized in that** the method of control further includes:
• a step (E100) of assigning the second router as backup router for the first router;
• a step (E201, E202) of transmitting to the external packet data network an item of information relating to said assignment of the backup router;
• a step (E400) of detecting an event relating to a failure of the first router;
• a step (E500) of transmitting to the backup router all of the established processing rules for the first router, intended to be applied by the backup router, the transmission step (E500) being triggered by the step (E400) of detecting an event relating to a failure of the first router.

2. Method of control according to Claim 1, including a step of storing the established rules, a rule remaining stored as long at the at least one corresponding stream is currently being routed; and in which the step (E500) of transmitting all of the rules to the backup router includes the stored rules.

3. Method of control according to Claim 1, in which the step for establishing a rule for processing a stream includes:
• a step (E301) of receiving a request from the first router, including an identifier of a stream;
• a step (E302) of determining a processing rule for the stream;
• a step (E303) of transmitting a response to the first router, including said rule,
the method being **characterized in that** the step (E500) of transmitting at least one rule to the backup router includes the transmission of a plurality of said responses.

4. Method of control according to Claim 1, in which the step of transmitting (E201, E202) an item of information relating to the assignment of the backup router includes the transmission of a first request (E201) in conformity with the BGP protocol to the first router, including a first preference parameter, and the transmission of a second request (E202) in conformity with the BGP protocol to the second router, including a second preference parameter of lower value than the first.

5. Method of control according to any one of the preceding claims, in which the event relating to a failure of the first router is obtaining (E400) an item of information on failure originating from the first router.

6. Method of control according to the preceding claim, in which the failure information is obtained in a response conforming to the BFD Protocol.

7. Method of control according to any one of the preceding claims, in which the event relating to a failure of the first router is obtaining a plurality of requests for stream processing rules originating from the second router.

8. Method of control according to any one of the preceding claims, in which establishing the rules for processing data streams is in conformity with the OpenFlow protocol.

9. Device for controlling an SDN network, known as an IP core network, said IP core network including at least one first and one second router connected to an external packet data network and a plurality of switches capable of connecting at least one base station of a network for access to the first and second routers,
said packet data network being capable of transmitting data streams through the IP core network destined for terminals attached to the at least one base station, data streams currently being routed between the external network and at least one terminal,
the device including a module (140) for establishing one stream processing rule per stream received by the first router,
**characterized in that** the control device further includes:
• a module (150) for assigning the second router as backup router for the first router;
• a module (160) for transmitting to the external packet data network an item of information relating to said assignment of the backup router;
• a module (170) for detecting an event relating to a failure of the first router;
• a module (180) for transmitting to the backup router all of the established processing rules for the first router, intended to be applied by the backup router, the transmission module being triggered by the module for detecting an event relating to a failure of the first router.

10. A controller capable of transmitting requests conforming to the OpenFlow protocol, intended for equipment in an SDN network, known as an IP core network, and requests capable of reaching equipment in an external packet network, the controller including a control device as claimed in claim 9.

11. Computer program, **characterized in that** it includes instructions for implementing the steps of the method of control according to Claim 1, when this program is executed by a processor.

12. Recording medium readable by a controller on which the program according to Claim 11 is recorded.
